# EUROPEAN PATENT APPLICATION

(11) **EP 4 810 359 A1**
(43) Date of publication of application: **23.09.2026**
(21) Application number: 26154302.9
(22) Date of filing: 27.01.2026
(51) Int. Cl.: B62H 1/00, B62J 11/00, B62J 11/19, B62J 17/10, B62J 43/16, B62M 7/12

(54) **SADDLE-TYPE ELECTRIC VEHICLE**

(30) Priority: 17.03.2025 JP 2025042438
(71) Applicant: Honda Motor Co., Ltd., Toyko 105-8404 (JP)
(72) Inventor: YAMASAKI, Shota, 10520 Bangkok (TH); PANSUWAN, Nonthawat, 10520 Bangkok (TH); AYDOUNG, Tawatchai, 10520 Bangkok (TH); YINGYONGDAMRONGGUN, Pongsanat, 10520 Bangkok (TH)
(74) Representative: Weickmann & Weickmann PartmbB

(57) **Abstract**

Provided is a saddle-type electric vehicle that allows for smooth connecting of a charging plug to a charging connector and is capable of enhancing convenience in charge. A saddle-type electric vehicle (1) includes: a charging connector (50) via which a power storage (B) is charged; a front cover (7) that covers a front portion of a vehicle body and has an opening (H); and a lid (40) that is of an openable/closeable type and covers the opening (H). The lid (40) is a plate-shaped member having an upper portion (40t) and a lower portion (40b) in a closed state, the charging connector (50) is disposed at a location where the charging connector (50) faces outward through the opening (H), and when the lid (40) is in an open state, the upper portion (40t) is positioned rearward of the front cover (7) in a vehicle front-rear direction.

## Description

### BACKGROUND OF THE INVENTION

### Field of the Invention

The present invention relates to a saddle-type electric vehicle, and more particularly, to a saddle-type electric vehicle including a charging connector for charging an in-vehicle battery.

### Related Art

There is a known saddle-type electric vehicle equipped with a charging connector via which an in-vehicle battery is charged, and having an openable/closeable lid provided to an opening in which the charging connector is disposed.

Japanese Unexamined Patent Application, Publication No. 2021-66290 discloses a scooter-type electric vehicle provided with a low floor, and having a configuration in which a charging connector is disposed in an opening formed in a front cowl covering a front portion of the vehicle body, and an openable/closeable lid is provided to the opening.

Patent Document 1: Japanese Unexamined Patent Application, Publication No. 2021-66290

### SUMMARY OF THE INVENTION

Here, in order to smoothly connect a charging plug to the charging connector to charge the in-vehicle battery, it is preferable that the charging connector and the surroundings thereof can be clearly visually recognized. Further, it is desirable to reduce the likelihood that an occupant or any other person inadvertently comes into contact with the lid of the charging connector such that detachment of the charging plug from the charging connector can be prevented during charge. However, these technical problems are not considered in Japanese Unexamined Patent Application, Publication No. 2021-66290, and there is still room for improvement in the configurations of the opening in which the charging connector is disposed and the lid for the opening.

An object of the present invention is to solve the above-described technical problems of the related art, and provide a saddle-type electric vehicle that allows for smooth connecting of a charging plug to a charging connector and is capable of enhancing convenience in charge.

In order to achieve the above object, a first aspect of the present invention relates to a saddle-type electric vehicle (1) including: a charging connector (50) via which a power storage (B) is charged; a front cover (7) that covers a front portion of a vehicle body and has an opening (H); and a lid (40) that is of an openable/closeable type and covers the opening (H). The lid (40) is a plate-shaped member having an upper portion (40t) and a lower portion (40b) in a closed state, the charging connector (50) is disposed at a location inside the front cover (7) so that the charging connector (50) faces outward through the opening (H), and when the lid (40) is in an open state, the upper portion (40t) is positioned rearward of the front cover (7) in a vehicle front-rear direction.

According to a second aspect, the front cover (7) has a shape inclined downwardly forward in a side view of the vehicle body, and the lower portion (40b) of the lid (40) is positioned rearward of a lower end portion (7b) of the front cover (7) in the side view of the vehicle body when the lid (40) is in the open state.

According to a third aspect, the charging connector (50) has a connection portion (50s) that is positioned rearward of the lower portion (40b) of the lid (40) when the lid (40) is in the open state.

According to a fourth aspect, the saddle-type electric vehicle further includes a windscreen (31) disposed above the opening (H), the lid (40) is inclined rearwardly downward in the vehicle front-rear direction when the lid (40) is in the open state, and the lower portion (40b) of the lid (40) is positioned forward of a lower end portion (31b) of the windscreen (31) in the side view of the vehicle body when the lid (40) is in the open state.

According to a fifth aspect, the charging connector (50) is covered with the lid (40) in a plan view of the vehicle body when the lid (40) is in the open state.

According to a sixth aspect, the saddle-type electric vehicle further includes a headlight unit (8) disposed on the front cover (7) at a position closer to a lower end of the front cover (7), and the opening (H) is provided between the windscreen (31) and the headlight unit (8) in a front view of the vehicle body.

According to a seventh aspect, the saddle-type electric vehicle further includes: a vehicle body frame (F) including a head pipe (F1) and a main frame (F2) that extends downward from the head pipe (F1); a first support member (70) attached to a front portion of the head pipe (F1) and supporting the charging connector (50); a second support member (60) attached to a front portion of the first support member (70) and supporting the lid (40). An accommodation portion (76) that accommodates the upper portion (40t) of the lid (40) is provided in an upper portion of the first support member (70), and the front cover (7) is attached to a front portion of the second support member (60).

According to an eighth aspect, the second support member (60) includes a pair of left and right side walls (65) disposed on lateral sides of the charging connector (50), and has an opening (60a) communicating with the accommodation portion (76) of the first support member (70), and the lid (40) is pivotably supported by the side walls (65) via a pivot shaft (44), and the pivot shaft (44) overlaps with the charging connector (50) in a side view of the vehicle body.

According to a ninth aspect, the upper portion (40t) of the lid (40) has a stepped portion (42a), and the stepped portion (42a) abuts against a portion of an inner side of the front cover (7) when the lid (40) is in the closed state.

According to a tenth aspect, in the side view of the vehicle body, an inclination direction of the lid (40) when the lid (40) is in the open state is along an insertion/removal direction of a charging plug (51) that is connected to the charging connector (50).

According to the first aspect, in a saddle-type electric vehicle (1) including: a charging connector (50) via which a power storage (B) is charged; a front cover (7) that covers a front portion of a vehicle body and has an opening (H); and a lid (40) that is of an openable/closeable type and covers the opening (H), the lid (40) is a plate-shaped member having an upper portion (40t) and a lower portion (40b) in a closed state, the charging connector (50) is disposed at a location inside the front cover (7) so that the charging connector (50) faces outward through the opening (H), the upper portion (40t) is positioned rearward of the front cover (7) in a vehicle front-rear direction. Therefore, for example, as compared with an opening/closing structure including a hinge, the amount by which the lid protrudes outward from the surface of the front cover when the lid 40 is opened is reduced, whereby the charging connector and the surroundings thereof can be visually recognized further easily and clearly. As a result, the charging plug can be smoothly connected to the charging connector. Furthermore, since the lid protrudes by a small amount when the lid is open, it is possible to reduce the likelihood that an occupant or any other person comes into contact with the opened lid and the likelihood that the charging plug is detached during charge.

According to the second aspect, the front cover (7) has a shape inclined downwardly forward in a side view of the vehicle body, and the lower portion (40b) of the lid (40) is positioned rearward of a lower end portion (7b) of the front cover (7) in the side view of the vehicle body when the lid (40) is in the open state. Since the lower end portion of the front cover is positioned forward of the lid, it is possible to reduce the likelihood that an occupant or any other person inadvertently comes into contact with the opened lid.

According to the third aspect, the charging connector (50) has a connection portion (50s) that is positioned rearward of the lower portion (40b) of the lid (40) when the lid (40) is in the open state. Therefore, even when the lid is opened in a rainy environment or the like, the likelihood that raindrops or the like land on the charging connector is reduced. Further, even when water droplets are on the surface of the lid, the water droplets flow down along the surface of the lid, so that the likelihood that the water droplets land on the charging connector can be reduced.

According to the fourth aspect, the saddle-type electric vehicle further includes a windscreen (31) disposed above the opening (H), the lid (40) is inclined rearwardly downward in the vehicle front-rear direction when the lid (40) is in the open state, and the lower portion (40b) of the lid (40) is positioned forward of a lower end portion (31b) of the windscreen (31) in the side view of the vehicle body when the lid (40) is in the open state. Therefore, even if water droplets on the windscreen fall downward when the lid is in the open state, the water droplets are received by the surface of the lid and caused to flow rearward, whereby the likelihood that the water droplets land on the charging connector can be reduced.

According to the fifth aspect, the charging connector (50) is covered with the lid (40) in a plan view of the vehicle body when the lid (40) is in the open state. Therefore, it is possible to protect an upper portion of the charging connector by the lid when the lid is in the open state.

According to the sixth aspect, the saddle-type electric vehicle further includes a headlight unit (8) disposed on the front cover (7) at a position closer to a lower end of the front cover (7), and the opening (H) is provided between the windscreen (31) and the headlight unit (8) in a front view of the vehicle body. Therefore, the charging connector is disposed at a height at which charging operation can be easily performed, and the charging connector can be visually recognized further easily and clearly from outside.

According to the seventh aspect, the saddle-type electric vehicle further includes: a vehicle body frame (F) including a head pipe (F1) and a main frame (F2) that extends downward from the head pipe (F1); a first support member (70) attached to a front portion of the head pipe (F1) and supporting the charging connector (50); a second support member (60) attached to a front portion of the first support member (70) and supporting the lid (40), and an accommodation portion (76) that accommodates the upper portion (40t) of the lid (40) is provided in an upper portion of the first support member (70), and the front cover (7) is attached to a front portion of the second support member (60). Therefore, the front portion of the vehicle body can be assembled by fixing pre-assembled components to each other, thereby making it possible to increase the efficiency of the assembly work.

According to the eighth aspect, the second support member (60) includes a pair of left and right side walls (65) disposed on lateral sides of the charging connector (50), and has an opening (60a) communicating with the accommodation portion (76) of the first support member (70), and the lid (40) is pivotably supported by the side walls (65) via a pivot shaft (44), and the pivot shaft (44) overlaps with the charging connector (50) in a side view of the vehicle body. Therefore, it is possible to obtain the openable-closeable rotary lid that is more compact than a hinge mechanism and a slider mechanism.

According to the ninth aspect, the upper portion (40t) of the lid (40) has a stepped portion (42a), and the stepped portion (42a) abuts against a portion of an inner side of the front cover (7) when the lid (40) is in the closed state. Therefore, even when water droplets or the like on the front cover fall toward the opening, it is possible to reduce the likelihood that the water droplets or the like infiltrate into the opening from between the lid and the front cover.

According to the tenth aspect, in the side view of the vehicle body, an inclination direction of the lid (40) when the lid (40) is in the open state is along an insertion/removal direction of a charging plug (51) that is connected to the charging connector (50). Therefore, a user can easily grasp the inclination angle of the charging connector with reference to the inclination angle of the opened lid, and can smoothly connect the charging plug to the charging connector.

### BRIEF DESCRIPTION OF THE DRAWINGS

FIG. 1 is a left side view of an electric two-wheeled vehicle according to an embodiment of the present invention;
FIG. 2 is a perspective view of a vehicle body frame;
FIG. 3 is a plan view of the electric two-wheeled vehicle;
FIG. 4 is a front view of the electric two-wheeled vehicle;
FIG. 5 is a partially enlarged perspective view illustrating the lid and a structure therearound;
FIG. 6 is a perspective view illustrating a state in which a lid is opened;
FIG. 7 is a perspective view illustrating a state in which a charging plug is connected to a charging connector;
FIG. 8 is a plan view illustrating a state in which the charging plug is connected to the charging connector;
FIG. 9 is a perspective view of a second support member on which a lid is supported;
FIG. 10 is a left side view of the lid;
FIG. 11 is a perspective view of the second support member;
FIG. 12 is a perspective view illustrating a state in which the second support member is coupled to a first support member;
FIG. 13 is a perspective view illustrating a state in which the first support member is fixed to a head pipe F1;
FIG. 14 is a perspective view illustrating the first support member as viewed from the rear left;
FIG. 15 is a cross-sectional view taken along line XV-XV in FIG. 8;
FIG. 16 is a cross-sectional view illustrating a state in which the lid shown in FIG. 15 is opened;
FIG. 17 is a perspective view illustrating a state in which the first support member and the second support member have been attached to the vehicle body;
FIG. 18 is a cross-sectional view illustrating a relationship between an upper portion of the lid and a front cover; and FIG. 19 is a cross-sectional view taken along line XIX-XIX in FIG. 8.

### DETAILED DESCRIPTION OF THE INVENTION

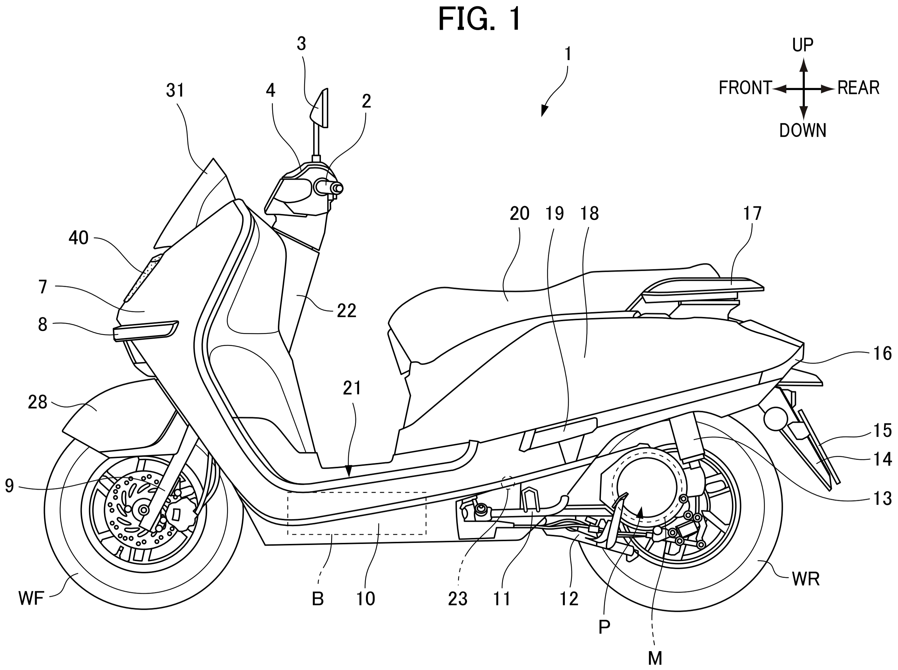

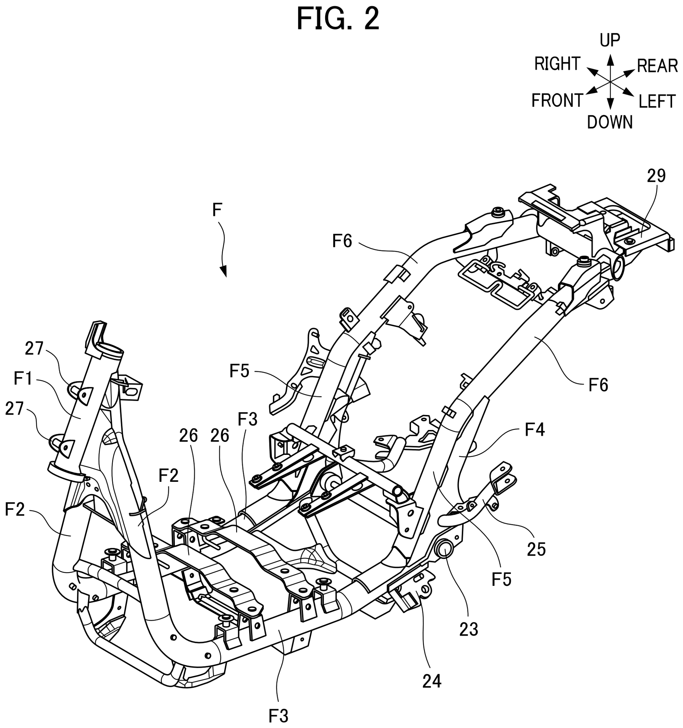

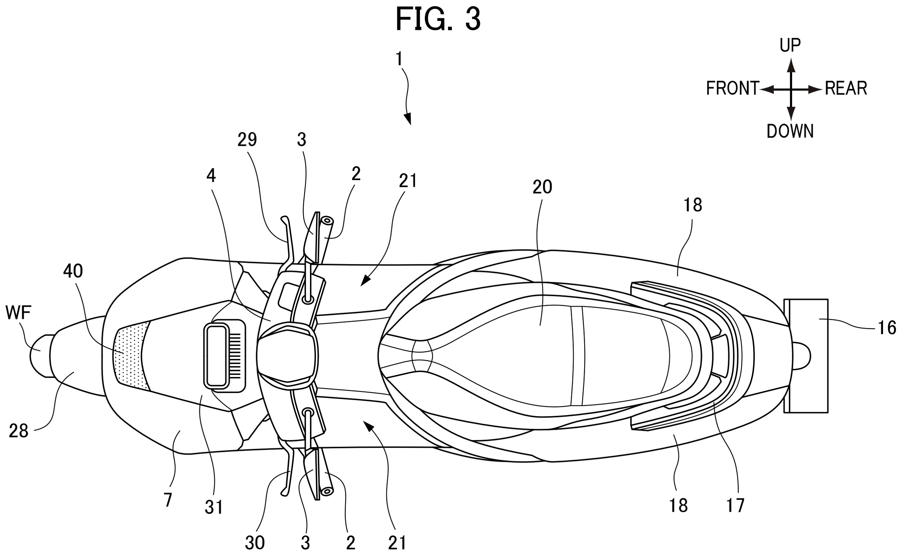

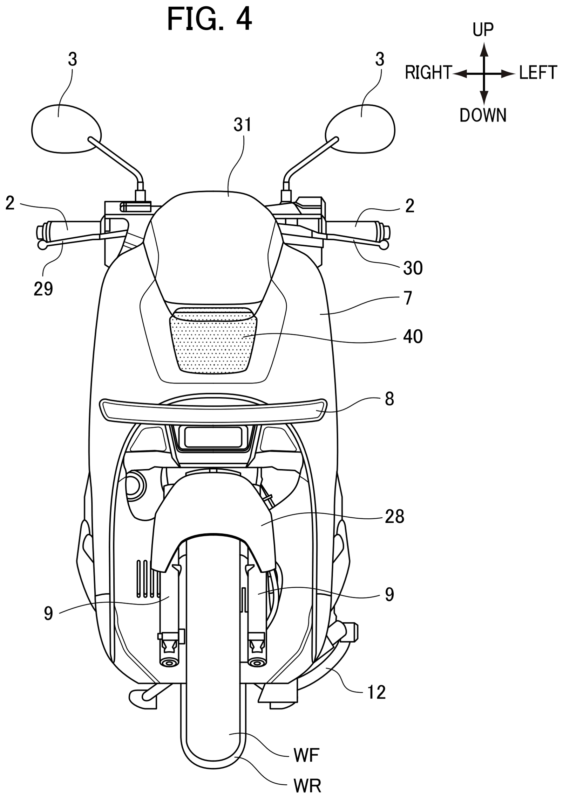

Preferred embodiments of the present invention will be described in detail with reference to the drawings. FIG. 1 is a left side view of an electric two-wheeled vehicle 1 according to an embodiment of the present invention. FIG. 2 is a perspective view of a vehicle body frame F. FIG. 3 is a plan view of the electric two-wheeled vehicle 1. FIG. 4 is a front view of the electric two-wheeled vehicle 1. The electric two-wheeled vehicle 1 is a scooter-type electric vehicle including a low floor 21 between steering handlebars 2 and a seat 20. An in-vehicle battery B as a power storage that supplies electric power to an electric motor M of a power unit P is accommodated at a position below the low floor 21 and inside an under cowl 10. A pair of left and right front forks 9 that rotatably support a front wheel WF are steered via the steering handlebars 2, on which rearview mirrors 3 are supported.

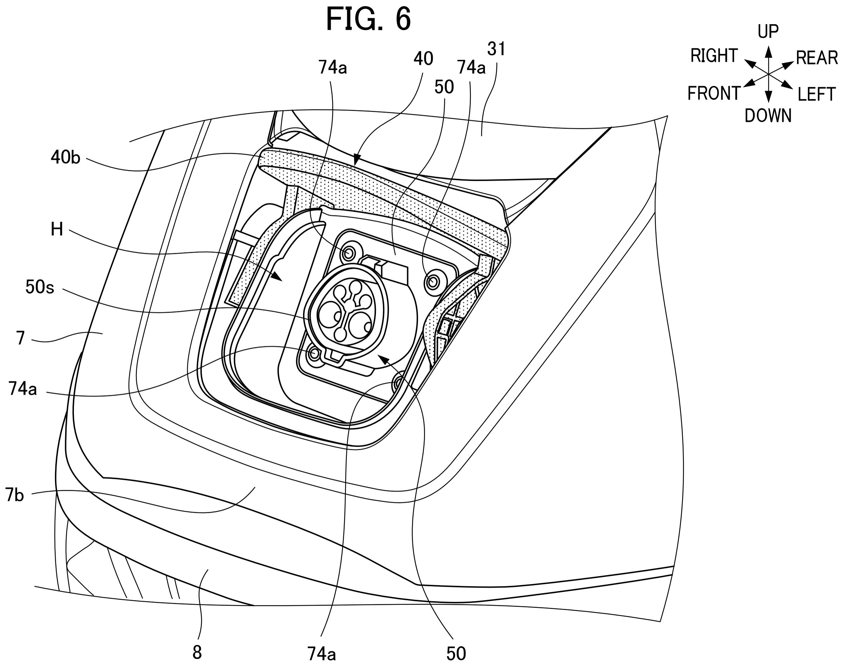

Front and rear sides of the steering handlebars 2 are covered with a handle cover 4, and a leg shield 22 configured to face the driver's legs is disposed below the handle cover 4. A front cover 7 that supports a headlight unit 8 and a windscreen 31 and covers a front portion of the vehicle body is connected to a front portion of the leg shield 22. Between the headlight unit 8 and the windscreen 31, an opening H (see FIG. 6) through which a charging connector 50 (see FIG. 6) for charging the in-vehicle battery B faces forward is formed, and a lid 40 (dotted hatching portion in the figures) that covers the opening H is disposed. A front fender 28 that covers an upper portion of the front wheel WF is attached to the front forks 9.

The vehicle body frame F is made of metal and includes a main frame F2 as a part thereof. The main frame F2 has a front end portion connected to a head pipe F1 that steerably supports the front forks 9. A front portion of the head pipe F1 is provided with stays 27 that support the lid 40 and other components. The main frame F2 has a lower end portion connected to a pair of left and right under frames F3 that extend rearward. Between the under frames F3, holder plates 26 that hold an upper portion of the in-vehicle battery B stretches. The in-vehicle battery B may be fixed to the vehicle body or may be detachably attached to the vehicle body. The under frames F3 have rear end portions connected to rising frames F5, which extend upwardly rearward and are connected to rear frames F6. Rear end portions of the pair of left and right rear frames F6 are coupled to each other by a coupling frame 29 that supports a rear grip 17 and other components.

A reinforcing gusset F4 is fixed to a rear portion of each rising frame F5. A pivot 23 that pivotally supports the power unit P of a unit swing type in a swingable manner and a step support 25 that supports rear steps 19 are fixed to the reinforcing gusset F4. A center stand 12 is pivotably supported at a lower portion of the power unit P. A holder 24 that pivotably supports a side stand 11 is fixed to a side of a rear end portion of the under frame F3 disposed on the left in the vehicle width direction. A rear end portion of the power unit P is suspended from the rear frames F6 by a rear cushion 13.

A rear cowl 18 is connected to a rear portion of the under cowl 10, and a taillight device 16 is attached to a rear end portion of the rear cowl 18. A rear fender 14 that supports a rear license plate 15 is attached below the taillight device 16. A front wheel brake lever 29 is pivotally supported in a swingable manner on the steering handlebar 2 on the right in the vehicle width direction, and a rear wheel brake lever 30 is pivotally supported in a swingable manner on the steering handlebar 2 on the left in the vehicle width direction.

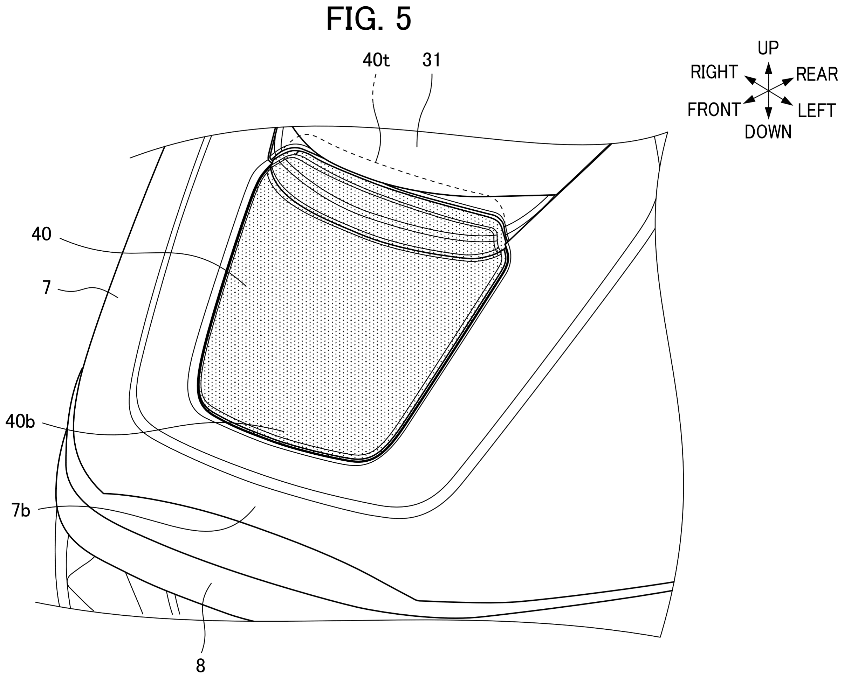

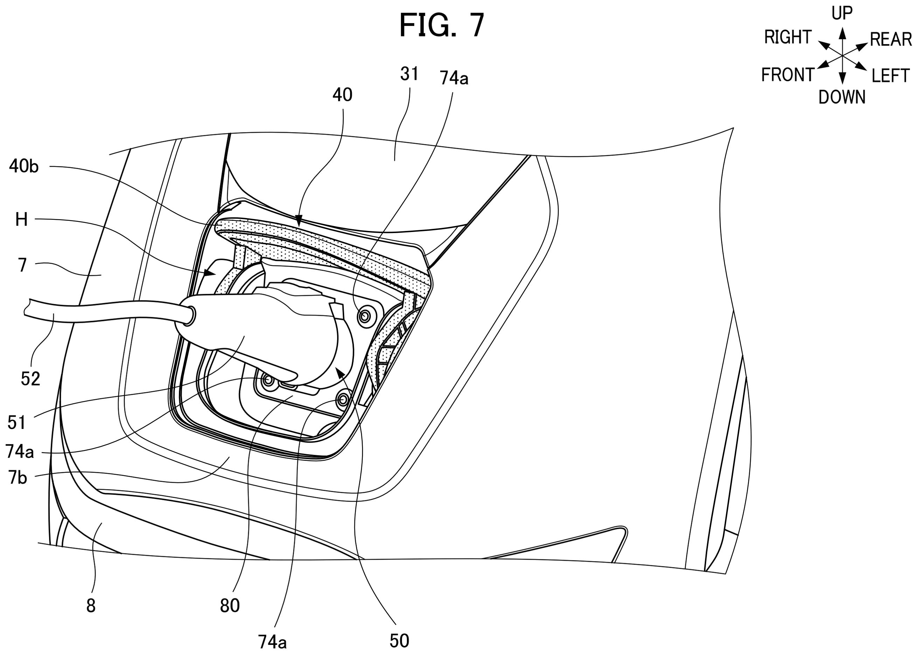

FIG. 5 is a partially enlarged perspective view illustrating the lid 40 and a structure therearound. FIG. 6 is a perspective view illustrating a state in which the lid 40 is opened. FIG. 7 is a perspective view illustrating a state in which a charging plug 51 is connected to the charging connector 50. The same reference signs as those described above denote the same or equivalent components/portions. The front cover 7 has a shape inclined downwardly forward in a side view of the vehicle body. The front cover 7 has the opening H through which the charging connector 50 faces forward. The charging connector 50 is supported by a support plate 80 and has a connection portion 50s to which the charging plug 51 is connected. The support plate 80 is supported by a first support member 70, which will be described later, via four fastening members 74a.

The lid 40, which is of a pivotal type and covers the opening H, has an upper portion 40t and a lower portion 40b in a closed state, and is a plate-shaped member that is substantially flush with the front cover 7. The headlight unit 8 is disposed below a lower end portion 7b of the front cover 7. The opening H is provided between the windscreen 31 and the headlight unit 8 in a front view of the vehicle body. Due to this configuration, the charging connector 50 is disposed at a height at which charging operation can be easily performed, and the charging connector 50 can be visually recognized further easily and clearly from outside.

To charge the in-vehicle battery B, the lid 40 is opened, and the charging plug 51 attached to the distal end of a power supply harness 52 is connected to the charging connector 50. At this time, the lid 40 is inclined downwardly rearward along the insertion/removal direction of the charging plug 51, so that the lower portion 40b of the lid 40 is positioned above the charging plug 51.

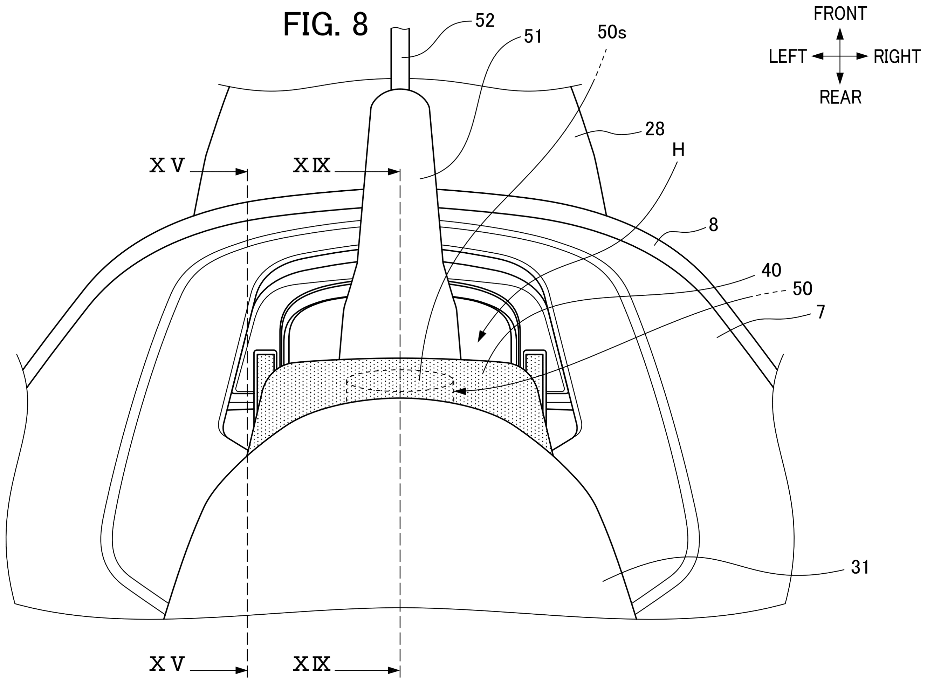

FIG. 8 is a plan view illustrating a state in which the charging plug 51 is connected to the charging connector 50. The same reference signs as those described above denote the same or equivalent components/portions. The charging connector 50 is covered from above by the lid 40 that is in the open state. Accordingly, it is possible to protect an upper portion of the charging connector 50 by the lid 40.

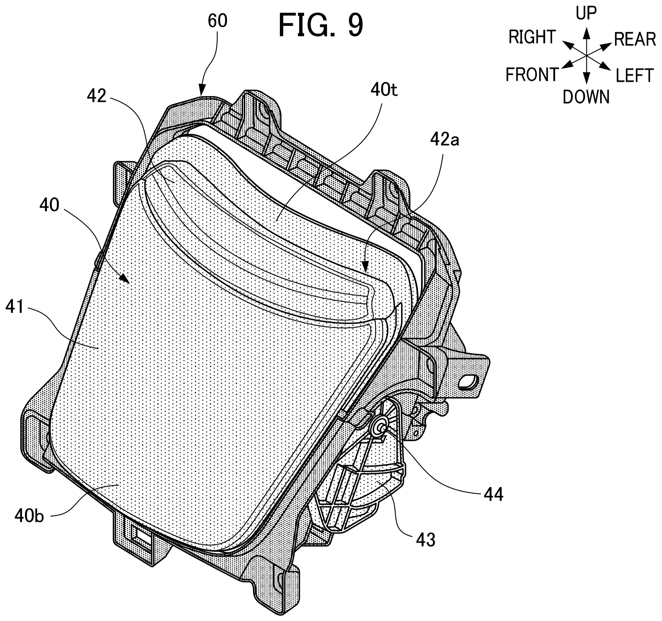

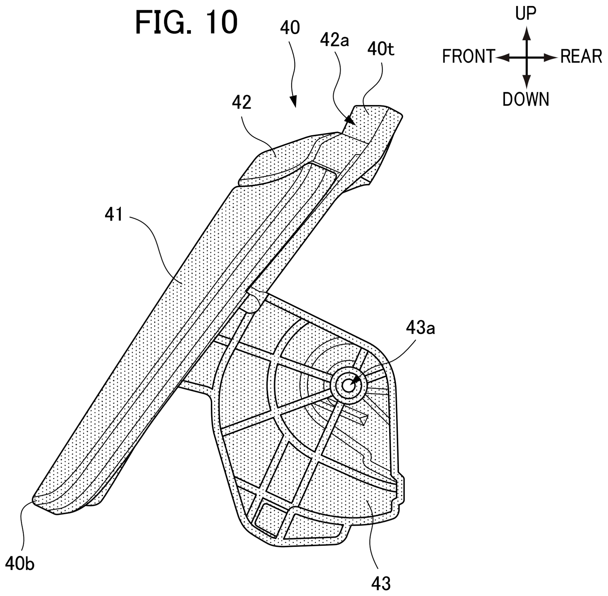

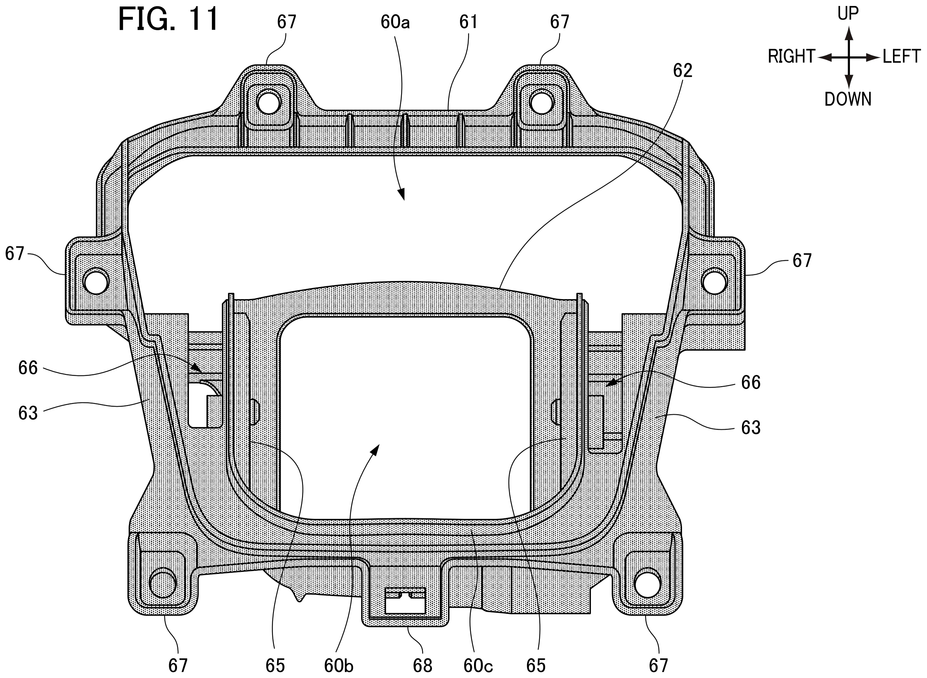

FIG. 9 is a perspective view of a second support member 60 on which the lid 40 is supported. FIG. 10 is a left side view of the lid 40. FIG. 11 is a perspective view of the second support member 60. The same reference signs as those described above denote the same or equivalent components/portions. The lid 40 is composed of hard synthetic resin or the like and includes a main body 42 having a pair of left and right legs 43, and a decorative plate 41 attached to a front portion of the main body 42. The main body 42 has a stepped portion 42a at an upper end thereof. The stepped portion 42a can be accommodated inside the front cover 7 when the lid 40 is in the closed state. The upper portion 40t of the lid 40 is provided with the stepped portion 42a. Each leg 43 has a plate shape, is provided with a plurality of ribs, and has a through hole 43a through which a pivot shaft 44 passes. In a side view, the pair of left and right legs 43 extend obliquely downward from the height-wise center of the main body 42 toward the rear of the vehicle, and then bend to extend downward. The rear end of each leg 43 is at the same position as the upper portion 40t of the main body 42 in the front-rear direction, and the lower end of each leg 43 is at the same position as the lower portion 40b of the decorative plate 41.

Referring to FIG. 11, the second support member 60 has an upper frame 61, a pair of left and right side frames 63, and a lower frame 64, and is a one-piece molded component having a substantially trapezoidal shape in a front view. Above the lower frame 64, a pair of left and right side walls 65 are disposed on the lateral sides of the charging connector 50. A middle frame 62 oriented in the vehicle width direction is provided. A rectangular lower opening 60b through which the support plate 80 for the charging connector 50 passes is formed below the middle frame 62, and an upper opening 60a in which the upper portion 40t of the lid 40 is accommodated when the lid 40 is in the open state is formed above the middle frame 62.

Slits 66 into which the legs 43 of the lid 40 are inserted are each formed between the side wall 65 and the side frame 63 of the second support member 60. In a front view, each slit 66 is open upward and has a shape cut out downward from substantially the same height as the upper frame 61. A convexity 60c extends along the lower opening 60b and between the slit 66 and the side wall 65 on both sides. A seal member 69 (not shown in FIG. 11) is disposed to seal a gap between the lid 40 and the second support member 60 when the lid 40 is in the closed state so that rainwater or the like is prevented from infiltrating into the inside. Support portions 67 and 68 for supporting the front cover 7 are provided on the outer peripheries of the upper frame 61, the side frames 63, and the lower frame 64.

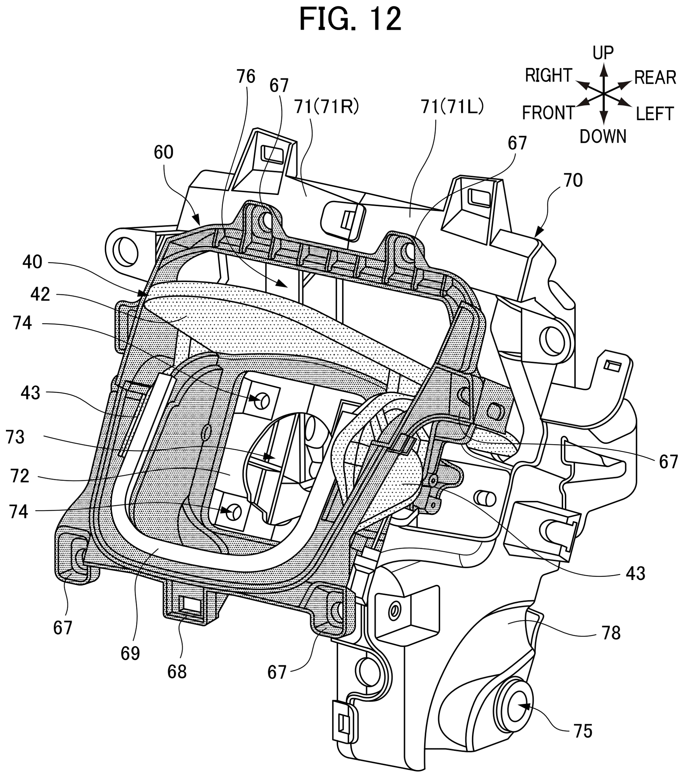

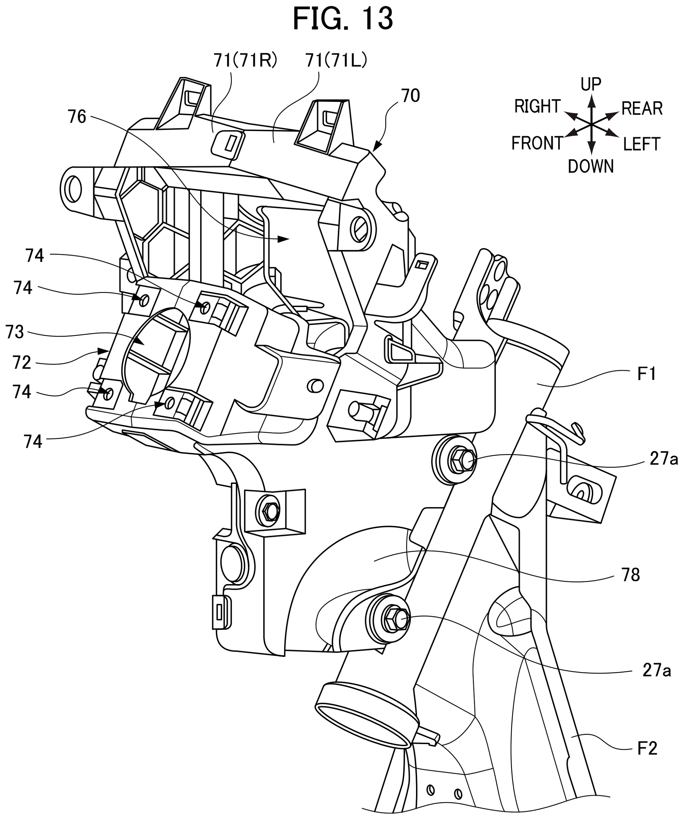

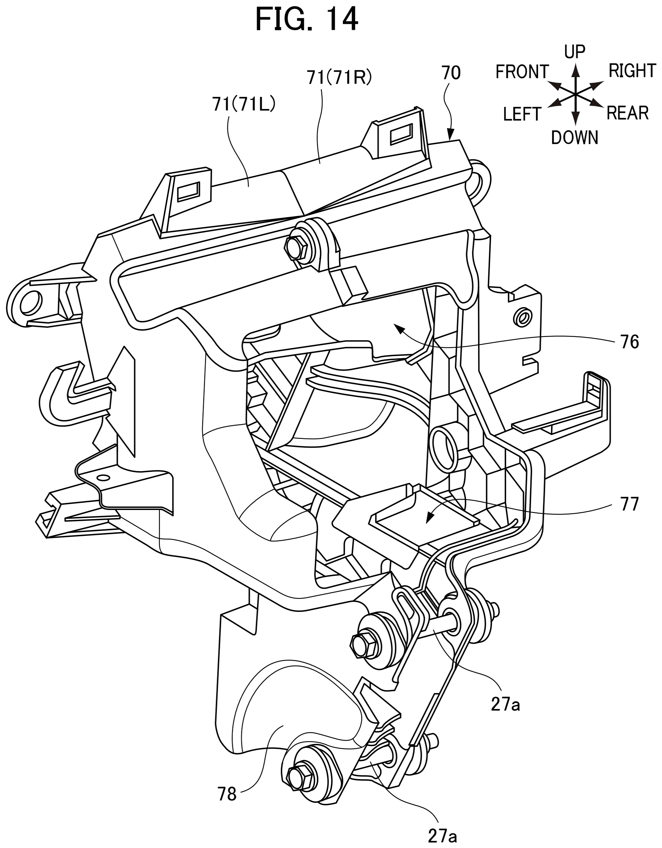

FIG. 12 is a perspective view illustrating a state in which the second support member 60 is coupled to the first support member 70. FIG. 13 is a perspective view illustrating a state in which the first support member 70 is fixed to the head pipe F1. FIG. 14 is a perspective view illustrating a state in which the first support member 70 is viewed from the rear left. The same reference signs as those described above denote the same or equivalent components/portions. The first support member 70 is composed of hard synthetic resin or the like, and formed by connecting a left half 70L and a right half 70R together.

The first support member 70 has, on a front portion thereof, a box-shaped protrusion 72 for fixing the second support member 60. The protrusion 72 has, at a center thereof, a substantially circular opening 73 in which the charging connector 50 is inserted, and has, at four corners thereof, through holes 74 through which fastening members 74a pass to fix the support plate 80 (see FIG. 6) that supports the charging connector 50. An accommodation portion 76 in which the upper portion 40t of the lid 40 is accommodated when the lid 40 is in the open state is formed above the protrusion 72. The accommodation portion 76 communicates with the upper opening 60a of the second support member 60 when the second support member 60 is coupled to the first support member 70.

The first support member 70 has a rear extension portion 78 that has a pair of upper and lower through holes 75 oriented in the vehicle width direction. The first support member 70 is fixed to the stay 27 provided on the front portion of the head pipe F1 with fastening members 27a such as bolts passing through the through holes 75. As illustrated in FIG. 14, the right half 71R of the first support member 70 has a substantially square opening 77 through which the wiring of the charging connector 50 passes. This makes it easy to route the wiring of the charging connector 50 from the right side of the head pipe F1 toward the vehicle body. Alternatively, the opening 77 may be provided in the left half body 71L, and the wiring of the charging connector 50 may be routed to the left side of the head pipe F1. The substantially U-shaped seal member 69 is attached to the front portion of the second support member 60 to enhance airtightness when the lid 40 is in the closed state. Due to the above-described configurations of the first support member 70 and the second support member 60, the front portion of the vehicle body can be assembled by coupling the support members 70 and 60 having the lid 40 and the charging connector 50 pre-assembled thereto to each other, thereby making it possible to increase the efficiency of the assembly work.

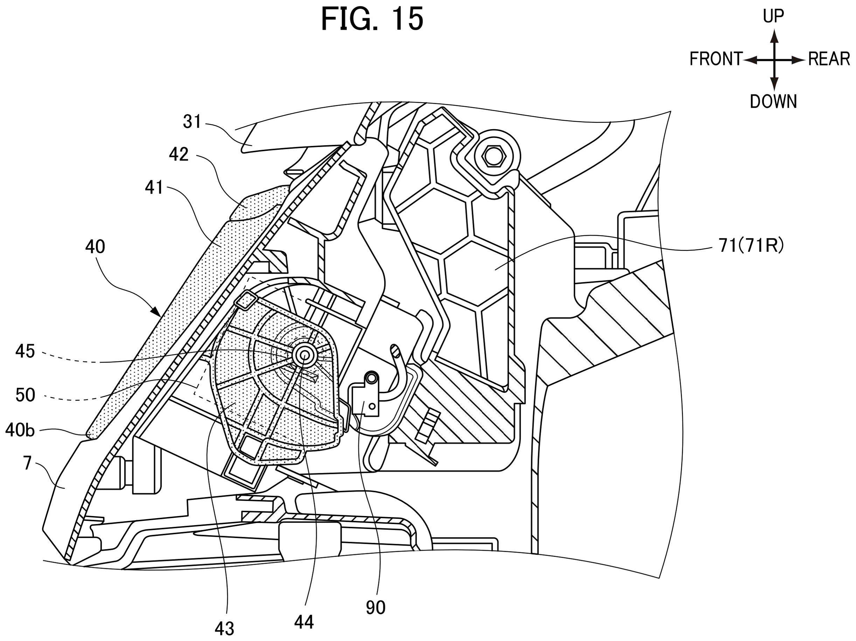

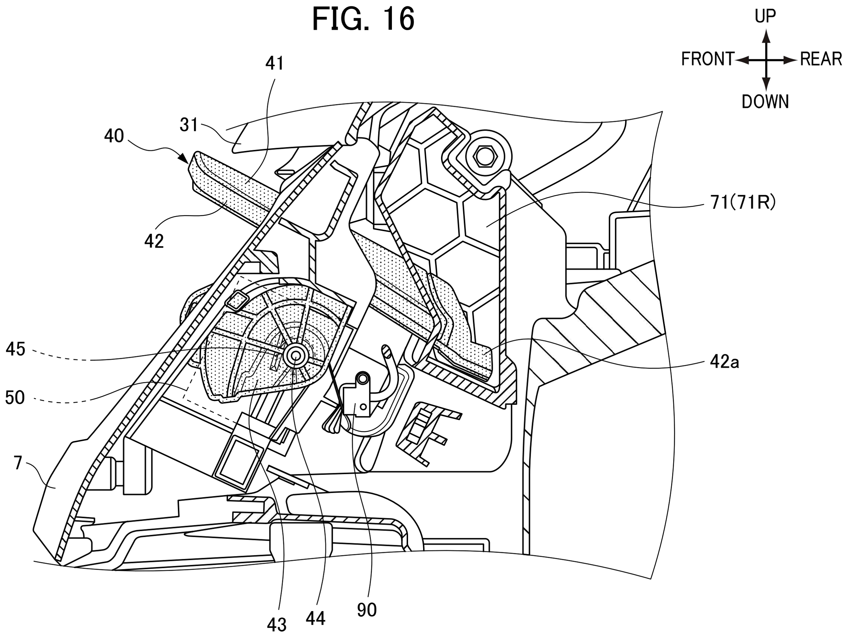

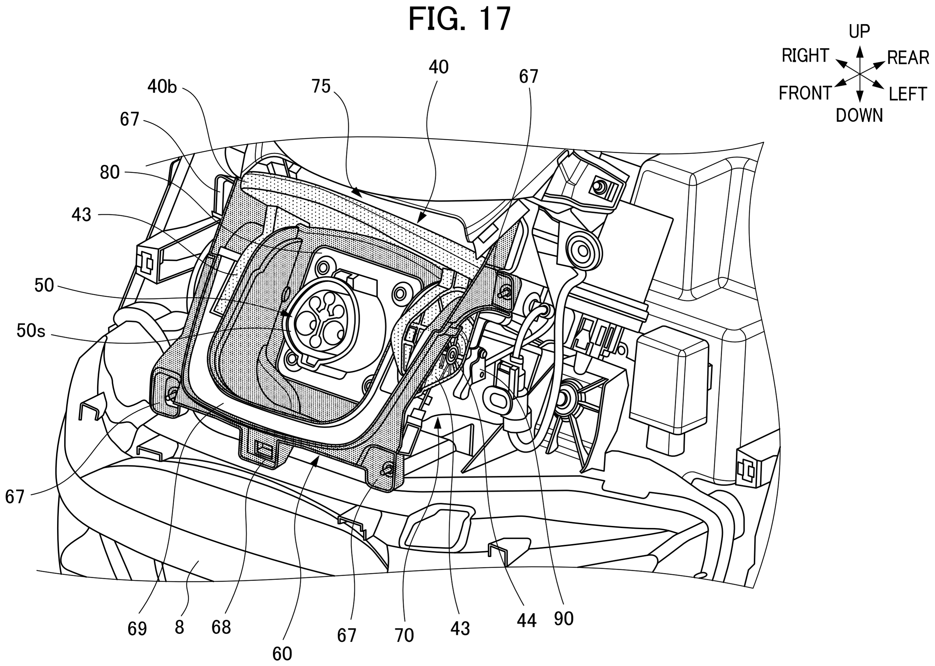

FIG. 15 is a cross-sectional view taken along line XV-XV in FIG. 8. FIG. 16 is a cross-sectional view illustrating a state in which the lid 40 shown in FIG. 15 is opened. FIG. 17 is a perspective view illustrating a state in which the first support member 70 and the second support member 60 have been attached to the vehicle body. The same reference signs as those described above denote the same or equivalent components/portions. The lid 40 is urged in an opening direction by an elastic member 45 composed of a helical spring or the like, and configured such that when the lower portion 40b of the lid 40 in the closed state is pushed, the lid 40 becomes unlocked to be opened by the urging force of the elastic member 45, and from the open state, the lid 40 is closed and becomes locked when the lower portion 40b is pushed. A lever or the like for opening the lid 40 may be provided.

The lid 40 is pivotably supported by the side walls 65 of the second support member 60 via the pivot shaft 44. The pivot shaft 44 is disposed at a position overlapping with the charging connector 50 in a side view of the vehicle body. This configuration makes it possible to obtain the openable-closeable rotary lid that is more compact than a hinge mechanism and a slider mechanism. An inhibitor switch 90 for detecting the open/closed state of the lid 40 is disposed in the vicinity of the outer periphery of the leg 43 of the lid 40, thereby making it possible to perform control to prohibit the electric two-wheeled vehicle 1 from traveling when the lid 40 is not in a predetermined closed state. When the lid 40 is not in the predetermined closed state, the occupant may be notified of the situation by means of display by a meter device, sound from a speaker, vibration by a vibrator, or the like. The inhibitor switch 90 can be configured to be switched between ON and OFF in response to an end portion of the elastic member 45 coming into contact with the inhibitor switch 90.

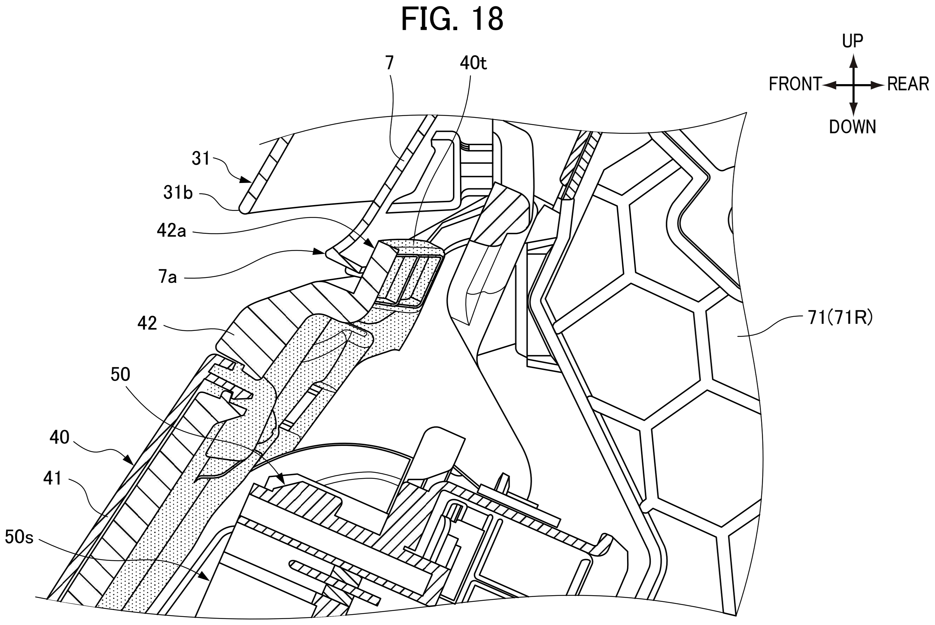

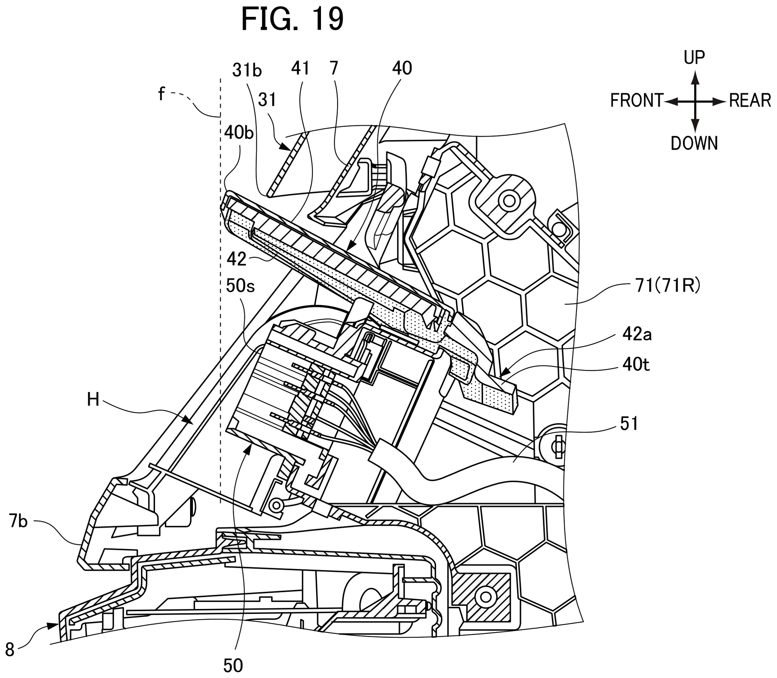

FIG. 18 is a cross-sectional view illustrating a relationship between the upper portion 40t of the lid 40 and the front cover 7. FIG. 19 is a cross-sectional view taken along line XIX-XIX in FIG. 8. The same reference signs as those described above denote the same or equivalent components/portions. The upper portion 40t of the lid 40 is provided with the stepped portion 42a. The stepped portion 42a is configured to abut against a portion of the inner side of the front cover 7 when the lid 40 is in the closed state. Due to this configuration, even when water droplets or the like on the front cover 7 fall toward the opening H, it is possible to reduce the likelihood that the water droplets or the like infiltrate into the opening H from between the lid 40 and the front cover 7. Further, the front cover 7 has an upper edge 7a located above the opening H. The upper edge 7a protrudes forward to function as an eaves, thereby reducing the likelihood that water droplets or the like infiltrate into the opening H. This effect is achieved by the configuration in which the back side of the stepped portion 42a is positioned above the upper edge 7a of the front cover 7.

Referring to FIG. 19, in the electric two-wheeled vehicle 1 according to the present embodiment, the upper portion 40t of the lid 40 is configured to be accommodated inside the front cover 7 when lid 40 is in the open state. The upper portion 40t of the lid 40 may have a dimension of, for example, 30% to 60% of the dimension of the lid 40 in the up-down direction. Accordingly, for example, as compared with an opening/closing structure including a hinge, the amount by which the lid 40 protrudes outward from the surface of the front cover 7 when the lid 40 is opened is reduced, whereby the charging connector 50 and the surroundings thereof can be visually recognized further easily and clearly. As a result, the charging plug 51 can be smoothly connected to the charging connector 50. Furthermore, since the lid 40 protrudes by a small amount when the lid 40 is open, it is possible to reduce the likelihood that an occupant or any other person comes into contact with the opened lid 40 and the likelihood that the charging plug 51 is detached during charge.

Further, the front cover 7 has a shape inclined downwardly forward in a side view of the vehicle body, and the lower portion 40b of the lid 40 is positioned rearward of the lower end portion 7b of the front cover 7 in the side view of the vehicle body when the lid 40 is in the open state. This configuration, in which the lower end portion 7b of the front cover 7 is positioned forward of the lid 40, makes it possible to reduce the likelihood that an occupant or any other person inadvertently comes into contact with the opened lid 40.

The connection portion 50s of the charging connector 50 is positioned rearward of a lower end position f of the lower portion 40b of the lid 40 when the lid 40 is in the open state. Due to this configuration, even when the lid 40 is opened in a rainy environment or the like, the likelihood that raindrops or the like land on the charging connector 50 is reduced. Further, even when water droplets are on the surface of the lid 40, the water droplets flow down along the surface of the lid 40, so that the likelihood that the water droplets land on the charging connector 50 can be reduced.

The lid 40 is configured to be inclined rearwardly downward in the vehicle front-rear direction when the lid 40 is in the open state, and the lower portion 40b of the lid 40 is positioned forward of a lower end portion 31b of the windscreen 31 in a side view of the vehicle body when the lid 40 is in the open state. Due to this configuration, even if water droplets on the windscreen 31 fall downward when the lid 40 is in the open state, the water droplets are received by the surface of the lid 40 and caused to flow rearward, whereby the likelihood that the water droplets land on the charging connector 50 can be reduced. In addition, because the upper portion 40t of the lid 40 is positioned rearward of the support plate 80 when the lid 40 is in the open state, water droplets can be discharged without affecting the charging connector or the like.

Furthermore, the present embodiment is configured such that in a side view of the vehicle body, the inclination direction of the lid 40 when the lid 40 is in the open state is along the insertion/removal direction of the charging plug 51 that is connected to the charging connector 50. Due to this configuration, the user can easily grasp the inclination angle of the charging connector 50 with reference to the inclination angle of the opened lid 40, and can smoothly connect the charging plug 51 to the charging connector 50.

As described above, according to the electric two-wheeled vehicle 1 of the present invention, the lid 40 is a plate-shaped member having the upper portion 40t and the lower portion 40b in the closed state, the charging connector 50 is disposed at a position where the charging connector 50 faces outward through the opening H, and when the lid 40 is the open state, at least a part of the upper portion 40t is accommodated inside the front cover 7, in other words, the upper portion 40t is positioned rearward of the front cover 7 in the vehicle front-rear direction. Therefore, for example, as compared with an opening/closing structure including a hinge, the amount by which the lid 40 protrudes outward from the surface of the front cover 7 when the lid 40 is opened is reduced, whereby the charging connector 50 and the surroundings thereof are visually recognized more easily and clearly. As a result, the charging plug 51 can be smoothly connected to the charging connector 50. Furthermore, since the lid 40 protrudes by a small amount when the lid 40 is open, it is possible to reduce the likelihood that an occupant or any other person comes into contact with the opened lid 40 and the likelihood that the charging plug 51 is detached during charge.

The configuration of the electric two-wheeled vehicle, the shapes and structures of the charging connector and the charging plug, the shape and structure of the front cover, the shape and structure of the lid, the shapes and structures of the first support member and the second support member, and the like are not limited to those described in the above embodiments, and various modifications can be made. For example, the opening may be formed in a front cover that covers the front portion of the vehicle body, a side cover, a leg shield, or the like. The lid may be a one-piece component. The lid structure according to the present embodiment is applicable to not only an electric two-wheeled vehicle, but also a saddle-type electric vehicle such as an electric three-wheeled vehicle having a front cover.

### EXPLANATION OF REFERENCE NUMERALS

1: electric two-wheeled vehicle (saddle-type electric vehicle)
7: front cover
7b: lower end portion of front cover
8: headlight unit
31: windscreen
31b: lower end portion of windscreen
40: lid
40t: upper portion of lid
40b: lower portion of lid
41: decorative plate
42: main body
42a: stepped portion
44: pivot shaft
50: charging connector
50s: connection portion of charging connector
51: charging plug
60: second support member
60a: upper opening
65: side wall
70: first support member
76: accommodation portion
B: in-vehicle battery (power storage)
H: opening
F: body frame
F1: head pipe
F2: main frame

## Claims

1. A saddle-type electric vehicle (1) comprising:
a charging connector (50) via which a power storage (B) is charged;
a front cover (7) that covers a front portion of a vehicle body and has an opening (H); and
a lid (40) that is of an openable/closeable type and covers the opening (H), wherein
the lid (40) is a plate-shaped member having an upper portion (40t) and a lower portion (40b) in a closed state,
the charging connector (50) is disposed at a location inside the front cover (7) so that the charging connector (50) faces outward through the opening (H), and
when the lid (40) is in an open state, the upper portion (40t) is positioned rearward of the front cover (7) in a vehicle front-rear direction.

2. The saddle-type electric vehicle according to claim 1, wherein
the front cover (7) has a shape inclined downwardly forward in a side view of the vehicle body, and
the lower portion (40b) of the lid (40) is positioned rearward of a lower end portion (7b) of the front cover (7) in the side view of the vehicle body when the lid (40) is in the open state.

3. The saddle-type electric vehicle according to claim 2, wherein the charging connector (50) has a connection portion (50s) that is positioned rearward of the lower portion (40b) of the lid (40) when the lid (40) is in the open state.

4. The saddle-type electric vehicle according to claim 2 or 3, further comprising:
a windscreen (31) disposed above the opening (H), wherein
the lid (40) is inclined rearwardly downward in the vehicle front-rear direction when the lid (40) is in the open state, and
the lower portion (40b) of the lid (40) is positioned forward of a lower end portion (31b) of the windscreen (31) in the side view of the vehicle body when the lid (40) is in the open state.

5. The saddle-type electric vehicle according to claim 3 or 4, wherein the charging connector (50) is covered with the lid (40) in a plan view of the vehicle body when the lid (40) is in the open state.

6. The saddle-type electric vehicle according to claim 4, further comprising:
a headlight unit (8) disposed on the front cover (7) at a position closer to a lower end of the front cover (7), wherein
the opening (H) is provided between the windscreen (31) and the headlight unit (8) in a front view of the vehicle body.

7. The saddle-type electric vehicle according to claim 1 or 2, further comprising:
a vehicle body frame (F) including a head pipe (F1) and a main frame (F2) that extends downward from the head pipe (F1);
a first support member (70) attached to a front portion of the head pipe (F1) and supporting the charging connector (50);
a second support member (60) attached to a front portion of the first support member (70) and supporting the lid (40), wherein
an accommodation portion (76) that accommodates the upper portion (40t) of the lid (40) is provided in an upper portion of the first support member (70), and
the front cover (7) is attached to a front portion of the second support member (60).

8. The saddle-type electric vehicle according to claim 7, wherein
the second support member (60) includes a pair of left and right side walls (65) disposed on lateral sides of the charging connector (50), and has an opening (60a) communicating with the accommodation portion (76) of the first support member (70), and
the lid (40) is pivotably supported by the side walls (65) via a pivot shaft (44), and
the pivot shaft (44) overlaps with the charging connector (50) in a side view of the vehicle body.

9. The saddle-type electric vehicle according to claim 8, wherein
the upper portion (40t) of the lid (40) has a stepped portion (42a), and
the stepped portion (42a) abuts against a portion of an inner side of the front cover (7) when the lid (40) is in the closed state.

10. The saddle-type electric vehicle according to claim 4, wherein in the side view of the vehicle body, an inclination direction of the lid (40) when the lid (40) is in the open state is along an insertion/removal direction of a charging plug (51) that is connected to the charging connector (50).
